(19) Europäisches Patentamt
European Patent Office
Office européen des brevets

(11) **EP 4 762 933 A1**

(12) **EUROPÄISCHE PATENTANMELDUNG**

(43) Veröffentlichungstag:
**24.06.2026 Patentblatt 2026/26**

(21) Anmeldenummer: **25224018.9**

(22) Anmeldetag: **16.12.2025**

(51) Internationale Patentklassifikation (IPC):
***A22C 15/00*** (2006.01)  ***B65G 47/30*** (2006.01)

(52) Gemeinsame Patentklassifikation (CPC):
**A22C 15/001; B65G 47/30**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **18.12.2024 DE 102024138724**

(71) Anmelder: **VEMAG Maschinenbau GmbH**
**27283 Verden/Aller (DE)**

(72) Erfinder: **Otten, Manuel**
**27308 Kirchlinteln (DE)**

(74) Vertreter: **Eisenführ Speiser**
**Patentanwälte Rechtsanwälte PartGmbB**
**Postfach 10 60 78**
**28060 Bremen (DE)**

(54) **VERFAHREN ZUM BEREITSTELLEN VON WÜRSTCHEN-PORTIONEN, BETREFFENDES PORTIONIERGERÄT UND SYSTEM**

(57) Die Erfindung betrifft ein Verfahren (200) zum Bereitstellen von Portionen (P) aus in einer Hülle bereitgestellter pastöser Lebensmittel-Masse, insbesondere Würstchen-Portionen, bei dem a) mittels eines ersten Portioniergerätes (4a) Portionen (P) aus in einer Hülle befindlicher pastöser Lebensmittel-Masse bereitgestellt werden, b) mittels eines zweiten Portioniergerätes (4b) Portionen (P) aus in einer Hülle befindlicher pastöser Lebensmittel-Masse bereitgestellt werden, c) die Portionen (P) an Haken (14) einer gemeinsamen Aufhängemaschine (6) übergeben werden, d) nach Übergabe von Portionen (P) die Haken (14) mittels der Aufhängemaschine (6) in eine Transportrichtung (T) weitertransportiert werden.

Erfindungsgemäß wird vorgeschlagen, dass eine Anzahl (x) an Haken (14) bestimmt wird, die das zweite Portioniergerät (4b) in Transportrichtung (T) passieren müssen, ohne dass Portionen (P) von dem zweiten Portioniergerät (4b) an die Haken (14) übergeben werden, um ein lückenloses und überlappungsfreies Behängen der Haken (14) der gemeinsamen Aufhängemaschine (6) zu ermöglichen, f) eine Steuerung (30b) des zweiten Portioniergerätes (4b) so angesteuert wird, dass für die bestimmte Anzahl (x) an Haken (14) keine Portionen von dem zweiten Portioniergerät (4b) an die Haken (14) übergeben werden, und nach dem Passieren der Anzahl (x) an Haken (14) Portionen von dem zweiten Portioniergerät (4b) an die Haken (14) übergeben werden.

Fig. 1

**Beschreibung**

Die Erfindung betrifft ein Verfahren zum Bereitstellen von Portionen aus in einer Hülle bereitgestellter pastöser Lebensmittel-Masse, insbesondere Würstchen-Portionen, bei dem a) mittels eines ersten Portioniergerätes Portionen aus in einer Hülle befindlicher pastöser Lebensmittel-Masse bereitgestellt werden, b) mittels eines zweiten Portioniergerätes Portionen aus in einer Hülle befindlicher pastöser Lebensmittel-Masse bereitgestellt werden, c) die Portionen an Haken einer gemeinsamen Aufhängemaschine übergeben werden, d) nach Übergabe von Portionen die Haken mittels der Aufhängemaschine in eine Transportrichtung weitertransportiert werden.

Ein derartiges Verfahren findet beispielsweise bei Produktionslinien für Würsten Anwendung. Bei einer solchen Würstchen-Produktionslinie wird das pastöse Wurstbrät von einer Füllmaschine bereitgestellt, in eine Hülle aus Natur- oder Kunstdarm gefüllt und einzelne Würstchen-Portionen durch Abdrehungen unterteilt. Ein Portioniergerät mit Abteilbändern stellt die eine Wurstkette ausbildenden Würstchen-Portionen in den gewünschten Längen und Gewichten bereit und transportiert diese weiter zu einer Aufhängemaschine, wo die Wurstketten in verschiedenen Hängemustern gruppiert übergeben und aufgehängt werden. So kann beispielsweise eine bestimmte Zahl von Würstchen an einen von mehreren Haken der Aufhängemaschine übergeben werden, sodass dann eine Schlaufe aus Würstchen von dem Haken herunterhängt.

Für den Fall, dass ein sogenannter kontinuierlicher Produktionsprozess vorliegt, bei dem Haken vorzugsweise kontinuierlich einer Kochanlage zugeführt werden sollen, hat es sich bewährt, zwei Portioniergeräte zu verwenden, sodass auch dann, wenn bei einem Portioniergerät ein sogenannter Darmwechsel vorgenommen wird, das andere Portioniergerät ein Behängen der Haken sicherstellt. Dabei wird eine von der Gesamtlänge des Darms, der Anzahl an Würstchen pro Haken, der Produktlänge der Portionen und der Anzahl an Abdrehungen zwischen den Portionen abhängige Anzahl an Haken behängt. Die tatsächlich behangenen Haken werden gezählt und als Rezeptparameter in das Programm der kontinuierlichen Kochanlage eingetragen. Da allerdings die kontinuierliche Kette von Haken von zwei Portioniergeräten behängt wird, wird von der Aufhängemaschine nach jedem Portioniervorgang eine Lücke in Form von leeren Haken erzeugt, wobei diese im Stand der Technik zahlenmäßig der im Rezept eingetragenen Zahl entspricht.

In der Praxis hat sich gezeigt, dass es dazu kommen kann, dass die behangenen Haken und die dazwischenliegenden Leerhaken, die in dem entsprechenden System hinterlegt sind, nicht zwingend dem tatsächlich beobachteten Zustand entspricht und es somit gewissermaßen dazu kommen kann, dass das erste Portioniergerät und das zweite Portioniergerät die Haken nicht länger synchron behängen. Dies kann auch zur Folge haben, dass Haken doppelt behangen werden und Produkte in der Kochanlage nicht korrekt gekocht oder geräuchert werden. Im Ergebnis sind die Produkte also unter Umständen nicht gar oder zumindest optisch nicht ansprechend, wenn sie am Ende des Kochens zum Verkauf verpackt werden sollten.

Vor diesem Hintergrund lag der Erfindung die Aufgabe zugrunde, ein Verfahren der eingangs bezeichneten Art dahingehend weiterzubilden, dass die im Stand der Technik aufgefundenen Nachteile möglichst weitgehend behoben werden. Insbesondere war ein Verfahren anzugeben, bei dem eine Synchronisierung des ersten Portioniergerätes und des zweiten Portioniergerätes verbessert wird.

Erfindungsgemäß wird die Aufgabe bei einem Verfahren der eingangs genannten Art dadurch gelöst, dass e) eine Anzahl an Haken bestimmt wird, die das zweite Portioniergerät in Transportrichtung passieren müssen, ohne dass Portionen von dem zweiten Portioniergerät an die Haken übergeben werden, um ein lückenloses und überlappungsfreies Behängen der Haken der gemeinsamen Aufhängemaschine zu ermöglichen, und f) eine Steuerung des zweiten Portioniergerätes so angesteuert wird, dass für die bestimmte Anzahl an Haken keine Portionen von dem zweiten Portioniergerät an die Haken übergeben werden, und nach dem Passieren der Anzahl an Haken Portionen von dem zweiten Portioniergerät an die Haken übergeben werden.

Die Erfindung macht sich die Erkenntnis zunutze, dass durch die Bestimmung der Anzahl an Haken, die das zweite Portioniergerät in Transportrichtung passieren müssen, ohne dass Portionen von diesem Portioniergerät an die Haken übergeben werden, und eine betreffende Steuerung des zweiten Portioniergerätes erreicht werden kann, dass das zweite Portioniergerät stets gegenüber dem ersten Portioniergerät synchronisiert ist, sodass ein lückenloses und überlappungsfreies Behängen der Haken der gemeinsamen Aufhängemaschine ermöglicht wird. Mit anderen Worten wird somit eine Relation zwischen dem ersten Portioniergerät und dem zweiten Portioniergerät hergestellt. Nach dem Portionierende des ersten Portioniergerätes, das heißt, nachdem dieses beispielsweise eine bestimmte Anzahl von Haken behangen hat, kann das zweite Portioniergerät lückenlos starten, indem es zunächst die bestimmte Anzahl an Haken gewissermaßen überspringt und nach dem Passieren der Anzahl an Haken Portionen von dem zweiten Portioniergerät an die Haken übergeben werden.

Gemäß einer Ausführungsform wird eine Anzahl von Haken bereitgestellt oder ermittelt, die sich an der Aufhängemaschine zwischen dem ersten Portioniergerät und dem zweiten Portioniergerät befindet, und eine Anzahl von Haken bereitgestellt oder ermittelt, die von dem ersten Portioniergerät zu behängen sind, wobei die Anzahl an Haken, die das zweite Portioniergerät passieren müssen, ohne dass Portionien an die Haken übergeben werden, auf Basis der Anzahl von Haken bestimmt wird, die sich an der Aufhängemaschine zwischen dem ersten Portioniergerät und dem zweiten Portioniergerät befindet, und der Anzahl von Haken, die von dem ersten Portioniergerät zu behängen sind.

Gemäß einer Ausführungsform wird die Anzahl x an Haken, die das zweite Portioniergerät passieren müssen, ohne dass Portionen an die Haken übergeben werden, in Abhängigkeit von der Anzahl n von Haken, die sich an der Aufhängemaschine zwischen dem ersten Portioniergerät und dem zweiten Portioniergerät befinden, und der Anzahl p von Haken, die von dem ersten Portioniergerät zu behängen sind, anhand folgender Formel bestimmt:

$$x = p-((n-p) \bmod p).$$

Das Ergebnis x der Berechnung ist die Anzahl an Haken, die ohne Übergabe von Portionen an die Haken verfahren werden müssen, um ein lückenloses und nicht überlappendes Behängen der Haken zu ermöglichen. Um dies umzusetzen, kann beispielsweise ein Produktleitrohr des zweiten Portioniergerätes rotieren, ohne dabei der Aufhängemaschine Produkte zuzuführen, wodurch die Haken, die vorzugsweise an einer kontinuierlichen Kette angeordnet sind, vorfahren. Nach dem erfolgreichen Vorfahren der Haken kann der reguläre Portionier- und Übergabevorgang von dem zweiten Portioniergerät an die Aufhängemaschine erfolgen.

Dies soll anhand eines Zahlenbeispiels verdeutlicht werden, bei dem davon ausgegangen wird, dass insgesamt n=200 Haken zwischen dem ersten und zweiten Portioniergerät angeordnet sind und von jedem Portioniergerät jeweils p=48 Haken in Folge zu behängen sind. Das Ergebnis der Berechnung gemäß der Formel $x = p-((n-p) \bmod p)$ lautet für die obigen Werte x=40.

In diesem Fall behängt das erste Portioniergerät die Haken 1-48, das zweite Portioniergerät die Haken 49-96, das erste Portioniergerät die Haken 97-144 und das zweite Portioniergerät die Haken 145-192. Da das erste Portioniergerät ab Haken 193 48 Haken bis zu Haken 240 behängt, muss das zweite Portioniergerät für x=40 Haken, nämlich die Haken 200 bis 240 rotieren ohne Portionen zu übergeben, damit die Haken 200 bis 240 nicht doppelt behangen werden. Hierdurch wird sichergestellt, dass das zweite Portioniergerät synchronisiert ist zu dem ersten Portioniergerät und die Haken der Aufhängemaschine lückenlos und überlappungsfrei behangen werden können.

Gemäß einer Ausführungsform weist das zweite Portioniergerät ein mittels eines Antriebs antreibbares Looper-Rohr auf, wobei das Behängen im Schritt f) derart erfolgt, dass das Looper-Rohr des zweiten Portioniergerätes für die Anzahl an Haken rotiert, ohne Portionen an die Haken zu übergeben, und nach dem Passieren der Anzahl an Haken rotiert und Portionen an die folgenden Haken übergibt.

Gemäß einer Ausführungsform wird die Anzahl der das zweite Portioniergerät passierenden Haken auf Basis eines Sensorsignals einer Koch- und/oder Räucheranlage bestimmt. Eine solche Anlage verfügt typischerweise über die entsprechende Sensorik, sodass die ohnehin gewonnenen Sensordaten auf diese Weise vorteilhaft auch für das erfindungsgemäße Verfahren verwendet werden können.

Gemäß einer Ausführungsform erfolgt die Bestimmung in Schritt f) bei einem Portionende des ersten Portioniergerätes, insbesondere, nachdem die gewünschte Anzahl an Haken von dem ersten Portioniergerät behangen worden ist. Selbstverständlich kann die Bestimmung im Schritt f) auch zu anderen Zeitpunkten erfolgen, wobei dann gegebenenfalls die Formel anzupassen ist, sodass sichergestellt wird, dass die Haken lückenlos und überlappungsfrei behangen werden.

Gemäß einer Ausführungsform wird das Verfahren dadurch weitergebildet, dass für den Fall, dass das erste Portioniergerät eine Anzahl von Haken tatsächlich behängt hat, deren Anzahl kleiner ist als die geplante Anzahl der zu behängenden Haken, g) eine Anzahl an Haken bestimmt wird, die das zweite Portioniergerät passieren müssen, ohne dass Portionen an die Haken übergeben werden, um ein lückenloses und überlappungsfreies Behängen der Haken der gemeinsamen Aufhängemaschine zu ermöglichen, h) die Steuerung des zweiten Portioniergerätes so angesteuert wird, dass auf Basis der in Schritt g) bestimmten Anzahl keine Portionen von dem zweiten Portioniergerät an die Haken übergeben werden, und nach dem Passieren der Anzahl an Haken Portionen von dem zweiten Portioniergerät an die Haken übergeben werden.

Diese Weiterbildung des Verfahrens macht sich die Erkenntnis zunutze, dass es in der Praxis gelegentlich zu einem sogenannten Produktionsabbruch kommt, bei dem durch ein Portioniergerät nicht die gewünschte Anzahl an Haken behängt wird, sondern eine geringere Anzahl. Durch die erfindungsgemäße Weiterbildung des Verfahrens kann das zweite Portioniergerät gewissermaßen hierauf reagieren und auch für den Fall, dass tatsächlich eine geringere Anzahl von Haken behangen wurde als geplant, derart mit dem ersten Portioniergerät synchronisiert werden, dass auch in einem solchen Fall ein überlappungsfreies Behängen der Haken sichergestellt wird.

Vorzugsweise wird die Anzahl y an Haken im Schritt g) in Abhängigkeit von der Anzahl der tatsächlich behangenen Haken l, der Anzahl von Haken n, die sich an der Aufhängemaschine zwischen dem ersten Portioniergerät und dem zweiten Portioniergerät befindet, und der Anzahl von Haken p, die von dem ersten Portioniergerät behangen werden sollten, anhand folgender Formel bestimmt wird:

$$y = p-((n-l) \bmod p).$$

Erneut kann das Behängen der Haken derart erfolgen, dass das Looper-Rohr des zweiten Portioniergerätes für die Anzahl an Haken rotiert, ohne Portionen an die Haken zu übergeben, und nach dem Passieren der Anzahl an Haken rotiert und Portionen an die nachfolgenden Haken übergeben.

Gemäß einer Ausführungsform ist das Looper-Rohr dazu eingerichtet, sowohl vorwärts als auch rückwärts zu rotieren. Auch dabei ist vorzugsweise der Antrieb der Haken mit dem Looper-Rohr synchronisiert. Dadurch, dass sowohl das Looper-Rohr als auch die Haken sowohl vorwärts als auch rückwärts bzw. in zwei Richtungen verfahren werden können, kann das Auffinden einer Position, an der der Portioniervorgang gestartet werden soll, erleichtert werden. Beispielsweise kann es deutlich schneller möglich sein, eine geringe Anzahl von Haken im Zuge einer Rückwärtsfahrt zu überwinden als beispielsweise im Zuge einer Vorwärtsfahrt eine große Anzahl an Haken, beispielsweise 20 oder 30 Haken.

Die Erfindung ist vorstehend unter Bezugnahme auf ein Verfahren beschrieben worden. In einem weiteren Aspekt betrifft die Erfindung ein Portioniergerät zum Bereitstellen von Portionen aus in einer Hülle befindlicher pastöser Lebensmittel-Masse, welches ein mittels eines Antriebs antreibbares Looper-Rohr aufweist, welches dazu eingerichtet ist, mehrere durch die Hülle miteinander verbundene Portionen an eine Aufhängemaschine zu übergeben, und jeweils eine Steuerung zum Steuern von Komponenten des Portioniergerätes.

Die Erfindung löst die eingangs bezeichnete Aufgabe in Bezug auf das Portioniergerät, indem die Steuerung dazu ausgebildet und eingerichtet ist, das Verfahren nach einem der vorstehenden Ausführungsbeispiele auszuführen. Das Portioniergerät macht sich die gleichen Vorteile und bevorzugten Ausführungsformen zunutze wie das erfindungsgemäße Verfahren und umgekehrt. Diesbezüglich wird auf die obigen Ausführungen verwiesen und deren Inhalt hier mit einbezogen.

Gemäß einer Ausführungsform wird den Portioniergeräten von jeweils einer dem jeweiligen Portioniergerät vorgeschalteten Füllmaschine mit einem Abgaberohr in einer Hülle befindliche Lebensmittel-Masse übergeben, wobei am Ausgangsbereich des jeweiligen Portioniergerätes das Looper-Rohr angeordnet ist, um Portionen in einer gewünschten Zahl pro Zeiteinheit und mit einem gewünschten Ziel-Gewicht an das Looper-Rohr übergeben zu können, und dass ausgleichsseitig hinter dem Looper-Rohr die Haken der Aufhängemaschine in Transportrichtung so bewegt werden können, dass eine gewünschte Zahl von Portionen von dem Looper-Rohr auf die Haken der Aufhängemaschine übergeben werden können.

In einem weiteren Aspekt betrifft die Erfindung ein System zum Bereitstellen von Portionen aus in einer Hülle bereitgestellter pastöser Lebensmittel-Masse, insbesondere Würstchen-Portionen und zur Durchführung eines Verfahrens nach mindestens einem der vorstehenden Ausführungsbeispiele, mit einem ersten Portioniergerät zum Bereitstellen von Portionen aus in einer Hülle befindlicher pastöser Lebensmittel-Masse, welches ein mittels eines Antriebs antreibbares Looper-Rohr aufweist, welches dazu ausgebildet ist, mehrere durch die Hülle miteinander verbundene Portionen an eine Aufhängemaschine zu übergeben, einem zweiten Portioniergerät zum Bereitstellen von Portionen aus in einer Hülle befindlicher pastöser Lebensmittel-Masse, welches ein mittels eines Antriebs antreibbares Looper-Rohr aufweist, welches dazu eingerichtet ist, mehrere durch die Hülle miteinander verbundene Portionen eine Aufhängemaschine zu übergeben, einer Aufhängemaschine zum Transportieren von mehreren Portionen, die mehrere Haken aufweist zum Aufnehmen mehrerer durch die Hülle verbundener Portionen, wobei die Haken mittels mindestens eines umlaufenden mittels eines Antriebs antreibbaren Antriebselements weitertransportiert werden können, und einer Steuerung zum Steuern von Komponenten des Portioniergerätes.

Die Erfindung löst die eingangs bezeichnete Aufgabe in Bezug auf das System, indem die Steuerung dazu ausgebildet und eingerichtet ist, das Verfahren nach einem der vorstehenden Ansprüche auszuführen. Auch das System macht sich die gleichen Vorteile und bevorzugten Ausführungsformen zunutze wie das erfindungsgemäße Verfahren sowie das erfindungsgemäße Portioniergerät und umgekehrt. Zur Vermeidung von Wiederholungen wird auf die obigen Ausführungen verwiesen und deren Inhalt hier mit einbezogen.

Gemäß einer Ausführungsform weist das System ferner eine Koch- und/oder Räucheranlage auf, wobei die Aufhängemaschine dazu eingerichtet ist, der Koch- und/oder Räucheranlage an den Haken aufgenommene Portionen zuzuführen. Dadurch, dass sichergestellt wird, dass die Haken nicht doppelt behangen werden, können die Produkte in der Koch- und/oder Räucheranlage korrekt gekocht und geräuchert werden. Hierdurch werden optisch ansprechende Produkte erzeugt, die einen gleichmäßigen Garungsgrad aufweisen, wenn sie am Ende des Kochens zum Verkauf verpackt werden sollen.

In einem weiteren Aspekt betrifft die Erfindung ein Computerprogrammprodukt. Die Erfindung löst die eingangs bezeichnete Aufgabe in Bezug auf das Computerprogrammprodukt, indem dieses Befehle umfasst, die bewirken, dass das Portioniergerät nach einem der vorstehenden Ausführungsbeispiele die Schritte des Verfahrens nach einem der vorstehenden Ausführungsbeispiele ausführt. Auch das Computerprogrammprodukt macht sich die gleichen Vorteile und bevorzugten Ausführungsformen zunutze wie das erfindungsgemäße Verfahren, das erfindungsgemäße Portioniergerät sowie das erfindungsgemäße System und umgekehrt. Diesbezüglich wird auf die obigen Ausführungen verwiesen und deren Inhalt hier mit einbezogen.

Die Erfindung wird nachfolgend anhand eines bevorzugten Ausführungsbeispiels unter Bezugnahme auf die beigefügten Figuren näher beschrieben.

Hierbei zeigen:

Fig. 1          ein Ausführungsbeispiel eines Systems zum Bereitstellen von Portionen aus in einer Hülle bereitgestellter pastöser Lebensmittel-Masse, insbesondere Würstchen-Portionen, in einer perspektivischen Ansicht;

Fig. 2          das Ausführungsbeispiel des Systems gemäß Fig. 1 in einer Seitenansicht;

Fig. 3          das erfindungsgemäße Verfahren in einer Darstellung als Blockschaltbild;

Fig. 4 und 5          schematische Darstellungen exemplarischer Berechnungsergebnisse des erfindungsgemäßen Verfahrens.

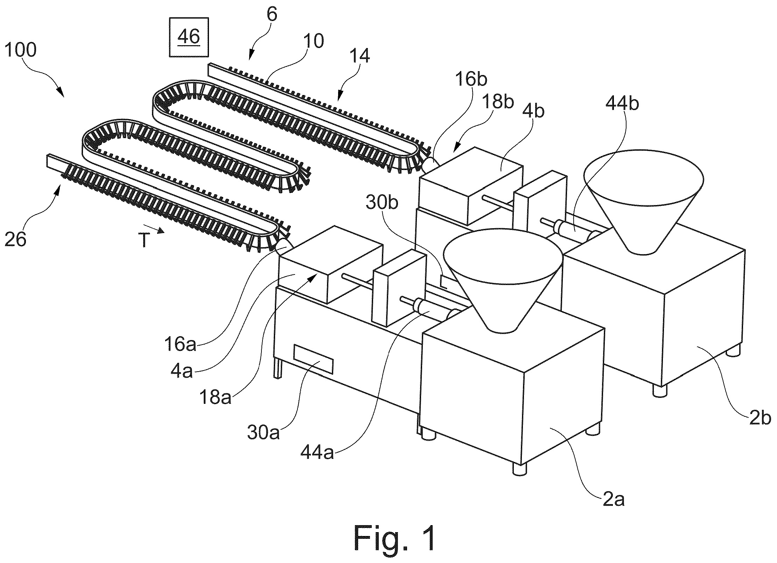

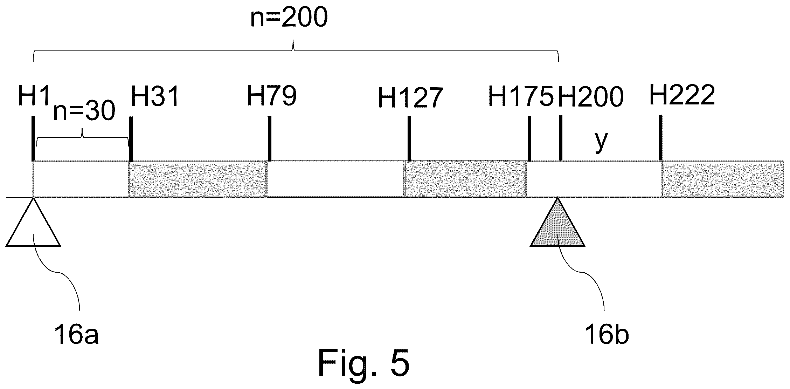

Fig. 1 zeigt ein System 100 zum Bereitstellen von Portionen P aus in einer Hülle bereitgestellter pastöser Lebensmittel-Masse, insbesondere Würstchen-Portionen. Das System 100 ist zur Durchführung des in Fig. 5 illustrierten Verfahrens eingerichtet. Das System 100 weist ein erstes Portioniergerät 4a auf. Das Portioniergerät 4a ist zum Bereitstellen von Portionen P aus in einer Hülle befindlicher pastöser Lebensmittel-Masse eingerichtet. Das erste Portioniergerät 4a weist ein mittels eines Antriebs 18a antreibbares Looper-Rohr 16a auf. Das Looper-Rohr 16a ist dazu ausgebildet, mehrere durch die Hülle miteinander verbundener Portionen P an eine Aufhängemaschine 6 zu übergeben.

Das System 100 weist darüber hinaus ein zweites Portioniergerät 4b auf. Das zweite Portioniergerät 4b ist zum Bereitstellen von Portionen P aus in einer Hülle befindlicher pastöser Lebensmittel-Masse eingerichtet. Auch das zweite Portioniergerät 4b weist einen mittels eines Antriebs 18b antreibbares Looper-Rohr 16b auf. Das Looper-Rohr 16b ist dazu ausgebildet, mehrere durch die Hülle miteinander verbundene Portionen P an eine Aufhängemaschine 6 zu übergeben. Das System 100 weist ferner eine Aufhängemaschine 6 zum Transportieren von mehreren Portionen P auf. Die Aufhängemaschine 6 weist mehrere Haken 14 auf zum Aufnahmen mehrerer durch die Hülle verbundener Portionen P. Die Haken 14 können mittels mindestens eines umlaufenden mittels eines Antriebs 26 antreibbaren Antriebselements 10 weitertransportiert werden, insbesondere in die in Fig. 1 gezeigte Transportrichtung T, aber unter Umständen auch in die Gegenrichtung. Darüber hinaus weist jedes der Portioniergeräte 4a, 4b eine Steuerung 30a, 30b auf. Diese ist jeweils dazu eingerichtet, das Verfahren gemäß Fig. 5 auszuführen.

Den Portioniergeräten 4a, 4b kann von jeweils einer dem jeweiligen Portioniergerät 4a, 4b vorgeschalteten Füllmaschine 2a, 2b mit einem Abgaberohr 44a, 44b in einer Hülle befindliche Lebensmittel-Masse übergeben werden. Am Ausgangsbereich des jeweiligen Portioniergerätes 4a, 4b ist das jeweilige Looper-Rohr 16a, 16b angeordnet, um Portionen P in einer gewünschten Zahl pro Zeiteinheit und mit einem gewünschten Ziel-Gewicht an das Looper-Rohr 16a, 16b zu übergeben. Das System 100 weist ferner eine Koch- und/oder Räucheranlage 46 auf, wobei die Aufhängemaschine 6 dazu eingerichtet ist, der Koch- und Räucheranlage 46 an den Haken 14 aufgenommene Portionen zuzuführen.

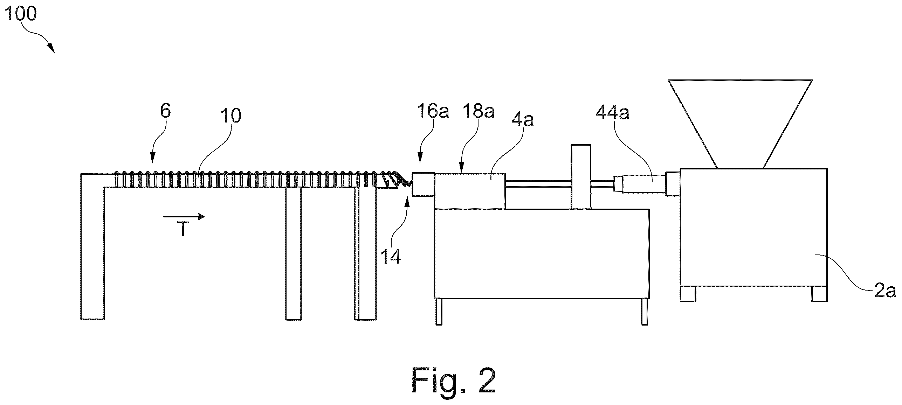

Das System 100 ist in Fig. 2 in einer Seitenansicht gezeigt, die aufgrund der gewählten Perspektive die erste Füllmaschine 2a zeigt, von der über das Abgaberohr 44a pastöse Masse dem ersten Portioniergerät 4a zugeführt wird. Nach dem Portionieren erfolgt mittels des durch einen Antrieb 18a angetriebenen Looper-Rohrs 16a ein Übergeben der erzeugten Portionen, insbesondere Würstchen, an die Haken 14 der Aufhängemaschine 6. Wie in Fig. 2 exemplarisch dargestellt ist, wird die Aufhängemaschine 6 mithilfe eines Antriebselements 10 angetrieben, sodass die Haken 14 vorzugsweise in Transportrichtung T transportiert werden können.

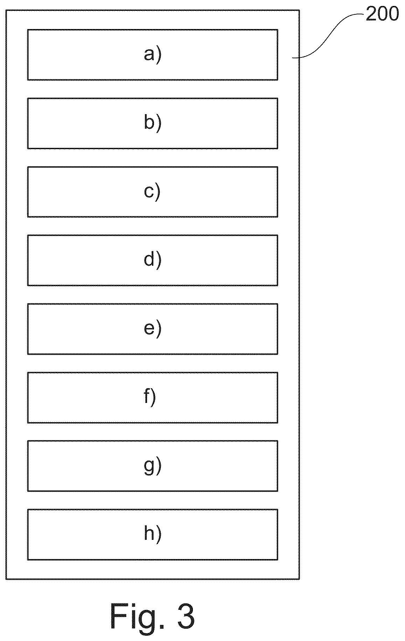

Fig. 3 zeigt ein Blockschaltbild eines erfindungsgemäßen Verfahrens 200 zum Bereitstellen von Portionen P aus in einer Hülle bereitgestellter pastöser Lebensmittel-Masse, insbesondere Würstchen-Portionen. Bei dem Verfahren 200 werden a) mittels eines ersten Portioniergerätes 4a Portionen P aus in einer Hülle befindlicher pastöser Lebensmittel-Masse bereitgestellt, b) mittels eines zweiten Portioniergerätes 4b Portionen P aus in einer Hülle befindlicher pastöser Lebensmittel-Masse bereitgestellt, c) die Portionen P an Haken 14 der in den Fig. 1 und 2 gezeigten gemeinsamen Aufhängemaschine 6 übergeben und d) nach der Übergabe von Portionen P die Haken 14 mittels der Aufhängemaschine 6 in die Transportrichtung T weitertransportiert.

Ausweislich des Verfahrens wird ferner im Schritt e) eine Anzahl x an Haken 14 bestimmt, die das zweite Portioniergerät 4b in Transportrichtung T passieren müssen, ohne dass Portionen P von dem zweiten Portioniergerät 4b an die Haken 14 übergeben werden, um ein lückenloses und überlappungsfreies Behängen der Haken 14 der gemeinsamen Aufhängemaschine 6 zu ermöglichen. Ferner weist das Verfahren den Schritt f) auf, wonach eine Steuerung 30b des zweiten Portioniergerätes 4b so angesteuert wird, dass für die bestimmte Anzahl x an Haken 14 keine Portionen von dem zweiten Portioniergerät 4b an die Haken 14 übergeben werden, und nach dem Passieren der Anzahl x an Haken 14 Portionen von dem zweiten Portioniergerät 4b an die Haken 14 übergeben werden.

Dabei wird eine Anzahl n von Haken 14 bereitgestellt oder ermittelt, die sich an der Aufhängemaschine 6 zwischen dem ersten Portioniergerät 4a und dem zweiten Portioniergerät 4b befinden. Ferner wird eine Anzahl p von Haken 14 bereitgestellt oder ermittelt, die von dem ersten Portioniergerät 4a zu behängen sind.

Die Anzahl x an Haken 14, die das zweite Portioniergerät 4b passieren müssen, ohne dass Portionen P an die Haken übergeben werden, wird auf Basis der Anzahl n von Haken 14 bestimmt, die sich an der Aufhängemaschine 6 zwischen dem ersten Portioniergerät 4a und dem zweiten Portioniergerät 4b befindet, und der Anzahl p von Haken 14, die von dem ersten Portioniergerät 4a zu behängen sind.

Insbesondere wird die Anzahl x an Haken 14, die das zweite Portioniergerät 4b passieren müssen, ohne dass Portionen P an die Haken 14 übergeben werden, in Abhängigkeit von der Anzahl n von Haken 14, die sich an der Aufhängemaschine 6 zwischen dem ersten Portioniergerät 4a und dem zweiten Portioniergerät 4b befinden, und der Anzahl p von Haken 14, die von dem ersten Portioniergerät 4a zu behängen sind, anhand folgender Formel bestimmt:

$$x = p-((n-p) \text{ modulo } p).$$

Für den Fall, dass wie in den Fig. 1 und 2 gezeigt das zweite Portioniergerät 4b ein mittels eines Antriebs 18b antreibbares Looper-Rohr 16b aufweist, erfolgt das Behängen im Schritt f) derart, dass das Looper-Rohr 16b des zweiten Portioniergerätes 4b für die Anzahl x an Haken 14 rotiert, ohne Portionen an die Haken 14 zu übergeben und nach dem Passieren der Anzahl x an Haken 14 rotiert und Portionen an die folgenden Haken 14 übergibt. Dabei kann die Anzahl der das zweite Portioniergerät 4b passierenden Haken 14 beispielsweise auf Basis eines Sensorsignals der in Fig. 1 gezeigten Koch- und/oder Räucheranlage 46 bestimmt werden. Die Bestimmung in Schritt f) kann bei einem Portionierende des ersten Portioniergerätes 4a erfolgen, insbesondere nachdem p Haken von dem ersten Portioniergerät 4a behängt worden sind.

Für den Fall, dass das erste Portioniergerät 4a eine Anzahl l von Haken tatsächlich behängt hat, deren Anzahl l kleiner ist als die geplante Anzahl p der zu behängenden Haken, dann werden vorzugsweise die Verfahrensschritte g) und h) durchgeführt. Diese Verfahrensschritte sind insbesondere für Szenarien von Relevanz, bei denen beispielsweise aufgrund eines sogenannten Produktionsabbruches die Anzahl der tatsächlich behängten Haken nicht der geplanten Anzahl p entspricht. In einem solchen Fall wird in Schritt g) eine Anzahl y an Haken 14 bestimmt, die das zweite Portioniergerät 4b passieren müssen, ohne dass Portionen P an die Haken 14 übergeben werden, um ein lückenloses und überlappungsfreies Behängen der Haken 14 der gemeinsamen Aufhängemaschine 6 zu ermöglichen. Ferner wird in Schritt h) die Steuerung 30b des zweiten Portioniergerätes 4b so angesteuert, dass auf Basis der in Schritt g) bestimmten Anzahl y keine Portionen von dem zweiten Portioniergerät 4b an die Haken 14 übergeben werden, und nach dem Passieren der Anzahl y an Haken 14 Portionen von dem zweiten Portioniergerät 4b an die Haken übergeben werden. Die Anzahl y an Haken 14 im Schritt g) wird dabei vorzugsweise in Abhängigkeit von der Anzahl der tatsächlich behangenen Haken l, der Anzahl n von Haken 14, die sich an der Aufhängemaschine 6 zwischen dem ersten Portioniergerät 4a und dem zweiten Portioniergerät 4b befindet, und der Anzahl p von Haken 14, die von dem ersten Portioniergerät 4a behangen werden sollten, anhand folgender Formel bestimmt wird:

$$y = p-((n-l) \text{ modulo } p).$$

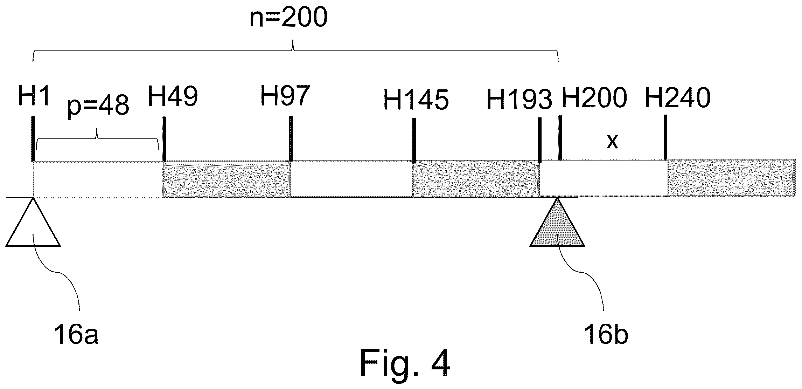

Das Verfahren wird nunmehr in den Fig. 4 und 5 anhand eines konkreten Zahlenbeispiels verdeutlicht.

Fig. 4 betrifft insbesondere die Verfahrensschritte e) und f). Gemäß Schritt e) soll die Anzahl x an Haken 14 bestimmt werden, die das zweite Portioniergerät 4b in Transportrichtung T passieren müssen, ohne dass Portionen P von dem zweiten Portioniergerät 4b an die Haken 14 übergeben werden, um ein lückenloses und überlappungsfreies Behängen der Haken 14 der gemeinsamen Aufhängemaschine 6 zu ermöglichen. Hierzu wird zunächst die Anzahl n von Haken 14 bereitgestellt oder ermittelt, die sich an der Aufhängemaschine 6 zwischen dem ersten Portioniergerät 4a und dem zweiten Portioniergerät 4b befinden. In dem in Fig. 4 gezeigten Beispiel sind 200 Haken 14 zwischen den Portioniergeräten 4a, 4b angeordnet. Darüber hinaus wird eine Anzahl p von Haken 14 bereitgestellt oder ermittelt, die von dem ersten Portioniergerät 4a zu behängen sind. In dem hier vorliegenden Beispiel wird davon ausgegangen, dass 48 Haken von dem ersten Portioniergerät 4a zu behängen sind. Das Ergebnis der Berechnung gemäß der Formel x = p-((n-p) modulo p) lautet für die obigen Werte x=40.

In dem in der Fig. 4 gezeigten Zustand behängt erste Portioniergerät 4a die Haken 1-48, das zweite Portioniergerät 4b die Haken 49-96, das erste Portioniergerät 4a die Haken 97-144 und das zweite Portioniergerät 4b die Haken 145-192. Da das erste Portioniergerät 4a die Haken 193-240 behängt, muss das zweite Portioniergerät 4b für x=40 Haken, nämlich die Haken 200 bis 240, rotieren ohne Portionen zu übergeben, damit die Haken 200 bis 240 nicht doppelt behängt werden.

Das bedeutet mit anderen Worten, dass von dem zweiten Portioniergerät 4b insgesamt 40 Haken zu überspringen sind, das heißt, beispielsweise, dass das Looper-Rohr 16b des zweiten Portioniergerätes 4b für acht Haken 14 rotiert, ohne dass Portionen an die Haken 14 übergeben werden, und nach dem Passieren der 40 Haken bei weiterer Rotation des Looper-Rohrs 16b Portionen an die folgenden Haken 14 übergeben werden. Hierdurch wird sichergestellt, dass die Haken lückenlos und überlappungsfrei behängt werden. Wenn beispielsweise, wie in Fig. 4 dargestellt, ein erster Haken H1 dem ersten Portioniergerät 4a zugeordnet ist, dann darf das zweite Portioniergerät 4b das Behängen erst dann beginnen, wenn diesem der Haken H241 zugeführt wurde, das heißt, nach dem Passieren von 40 Haken 14.

Fig. 5 veranschaulicht das unter Bezugnahme auf die Verfahrensschritte g) und h) beschriebene Teilverfahren. Darin wird der Fall adressiert, dass das erste Portioniergerät 4a eine Anzahl I von Haken tatsächlich behängt hat, deren Anzahl I kleiner ist als die geplante Anzahl p der zu behängenden Haken 14. Im vorliegenden Beispiel beträgt die geplante Anzahl p der zu behängenden Haken 48. Tatsächlich hat das erste Portioniergerät 4a jedoch lediglich I=30 Haken behängt, beispielsweise infolge eines sogenannten Produktionsabbruches. In diesem Fall erfolgt die Ermittlung der Anzahl n von Haken 14, die das zweite Portioniergerät 4b passieren, bevor Portionen an die Haken 14 übergeben werden, anhand folgender Formel:

$$y = p-((n-I) \bmod p).$$

Im vorliegenden Beispiel beträgt das Ergebnis der Berechnung y = 22, sodass 22 Haken das zweite Portioniergerät 4b passieren müssen, ohne dass Portionen an die Haken 14 übergeben werden.

In dem in der Fig. 5 gezeigten Zustand behängt erste Portioniergerät 4a die Haken 1-30, das zweite Portioniergerät 4b die Haken 31-78, das erste Portioniergerät 4a die Haken 79-126 und das zweite Portioniergerät 4b die Haken 127-174 und das erste Portioniergerät die Haken 175-222. Wenn beispielsweise, wie in Fig. 5 dargestellt, ein erster Haken H1 dem ersten Portioniergerät 4a zugeordnet ist, dann darf das zweite Portioniergerät 4b das Behängen erst dann beginnen, wenn diesem der Haken H223 zugeführt wurde, das heißt, nach dem Passieren von 22 Haken 14. Mit Erreichen des Hakens H223 kann der Übergabevorgang gestartet werden. Auf diese Weise wird vermieden, dass Haken im Falle eines Produktionsabbruches doppelt behängt werden.

Bezugszeichenliste

2a   (erste) Füllmaschine
2b   zweite Füllmaschine
4a   erstes Portioniergerät
4b   zweites Portioniergerät
6   Aufhängemaschine
10   Antriebselement der Aufhängemaschine
14   Haken
16a   Looper-Rohr
16b   Looper-Rohr
18a   Antrieb
18b   Antrieb
26   Antrieb der Aufhängemaschine
30a   Steuerung der ersten Füllmaschine
30b   Steuerung der zweiten Füllmaschine
44a   Abgaberohr der ersten Füllmaschine
44b   Abgaberohr der zweiten Füllmaschine
46   Koch-und/oder Räucheranlage
100   System zum Bereitstellen von Würstchen-Portionen
200   Verfahren zum Bereitstellen von Würstchen-Portionen
I   Anzahl an Haken, die tatsächlich behangen wurden
n   Anzahl an Haken, die sich an der Aufhängemaschine zwischen dem ersten Portioniergerät und dem zweiten Portioniergerät befinden
P   Portionen
p   Anzahl an Haken, die von dem ersten Portioniergerät zu behängen sind
T   Transportrichtung
x   Anzahl an Haken, die das zweite Portioniergerät passieren müssen, ohne dass Portionen von dem zweiten Portioniergerät an die Haken übergeben werden

**Patentansprüche**

1. Verfahren (200) zum Bereitstellen von Portionen (P) aus in einer Hülle bereitgestellter pastöser Lebensmittel-Masse, insbesondere Würstchen-Portionen, bei dem

   a) mittels eines ersten Portioniergerätes (4a) Portionen (P) aus in einer Hülle befindlicher pastöser Lebensmittel-Masse bereitgestellt werden,
   b) mittels eines zweiten Portioniergerätes (4b) Portionen (P) aus in einer Hülle befindlicher pastöser Lebensmittel-Masse bereitgestellt werden,
   c) die Portionen (P) an Haken (14) einer gemeinsamen Aufhängemaschine (6) übergeben werden,
   d) nach Übergabe von Portionen (P) die Haken (14) mittels der Aufhängemaschine (6) in eine Transportrichtung (T) weitertransportiert werden,

   **dadurch gekennzeichnet, dass**

   e) eine Anzahl (x) an Haken (14) bestimmt wird, die das zweite Portioniergerät (4b) in Transportrichtung (T) passieren müssen, ohne dass Portionen (P) von dem zweiten Portioniergerät (4b) an die Haken (14) übergeben werden, um ein lückenloses und überlappungsfreies Behängen der Haken (14) der gemeinsamen Aufhängemaschine (6) zu ermöglichen,
   f) eine Steuerung (30b) des zweiten Portioniergerätes (4b) so angesteuert wird, dass für die bestimmte Anzahl (x) an Haken (14) keine Portionen von dem zweiten Portioniergerät (4b) an die Haken (14) übergeben werden, und nach dem Passieren der Anzahl (x) an Haken (14) Portionen von dem zweiten Portioniergerät (4b) an die Haken (14) übergeben werden.

2. Verfahren (200) nach Anspruch 1, wobei

    - eine Anzahl (n) von Haken (14) bereitgestellt oder ermittelt wird, die sich an der Aufhängemaschine (6) zwischen dem ersten Portioniergerät (4a) und dem zweiten Portioniergerät (4b) befinden, und
    - eine Anzahl (p) von Haken (14) bereitgestellt oder ermittelt wird, die von dem ersten Portioniergerät (4a) zu behängen sind,

    wobei die Anzahl (x) an Haken (14), die das zweite Portioniergerät (4b) passieren müssen, ohne dass Portionen (P) an die Haken übergeben werden, auf Basis der Anzahl (n) von Haken (14) bestimmt wird, die sich an der Aufhängemaschine (6) zwischen dem ersten Portioniergerät (4a) und dem zweiten Portioniergerät (4b) befinden, und der Anzahl (p) von Haken (14), die von dem ersten Portioniergerät (4a) zu behängen sind.

3. Verfahren (200) nach Anspruch 2,
wobei die Anzahl (x) an Haken (14), die das zweite Portioniergerät (4b) passieren müssen, ohne dass Portionen (P) an die Haken (14) übergeben werden, in Abhängigkeit von der Anzahl (n) von Haken (14), die sich an der Aufhängemaschine (6) zwischen dem ersten Portioniergerät (4a) und dem zweiten Portioniergerät (4b) befinden, und der Anzahl (p) von Haken (14), die von dem ersten Portioniergerät (4a) zu behängen sind, anhand folgender Formel bestimmt wird:

$$x = p-((n-p) \text{ modulo } p).$$

4. Verfahren (200) nach einem der vorstehenden Ansprüche,

    wobei das zweite Portioniergerät (4b) ein mittels eines Antriebs (18b) antreibbares Looper-Rohr (16b) aufweist,
und wobei das Behängen im Schritt f) derart erfolgt, dass das Looper-Rohr (16b) des zweiten Portioniergerätes (4b) für die Anzahl (x) an Haken (14) rotiert, ohne Portionen an die Haken (14) zu übergeben, und nach dem Passieren der Anzahl (x) an Haken (14) rotiert und Portionen an die folgenden Haken (14) übergibt.

5. Verfahren (200) nach Anspruch 4,
wobei die Anzahl der das zweite Portioniergerät (4b) passierenden Haken (14) auf Basis eines Sensorsignals einer Koch-und/oder Räucheranlage (46) bestimmt wird.

6. Verfahren (200) nach einem der vorstehenden Ansprüche,

wobei die Bestimmung in Schritt f) bei einem Portionierende des ersten Portioniergerätes (4a) erfolgt, insbesondere nachdem (p) Haken (14) von dem ersten Portioniergerät (4a) behängt worden sind.

7. Verfahren (200) nach einem der vorstehenden Ansprüche,
wobei für den Fall, dass das erste Portioniergerät (4a) eine Anzahl (I) von Haken tatsächlich behängt hat, deren Anzahl (I) kleiner ist, als die geplante Anzahl (p) der zu behängenden Haken (14),

    g) eine Anzahl (y) an Haken (14) bestimmt wird, die das zweite Portioniergerät (4b) passieren müssen, ohne dass Portionen (P) an die Haken (14) übergeben werden, um ein lückenloses und überlappungsfreies Behängen der Haken (14) der gemeinsamen Aufhängemaschine (6) zu ermöglichen,
h) die Steuerung (30b) des zweiten Portioniergerätes (4b) so angesteuert wird, dass

        - auf Basis der in Schritt g) bestimmten Anzahl (y) keine Portionen (P) von dem zweiten Portioniergerät (4b) an die Haken (14) übergeben werden, und
        - nach dem Passieren der Anzahl (y) an Haken (14), Portionen von dem zweiten Portioniergerät (4b) an die Haken übergeben werden.

8. Verfahren (200) nach Anspruch 7,
wobei die Anzahl (y) an Haken (14) im Schritt g) in Abhängigkeit von der Anzahl der tatsächlich behangenen Haken (I), der Anzahl (n) von Haken (14), die sich an der Aufhängemaschine (6) zwischen dem ersten Portioniergerät (4a) und dem zweiten Portioniergerät (4b) befinden, und der Anzahl (p) von Haken (14), die von dem ersten Portioniergerät (4a) behangen werden sollten, anhand folgender Formel bestimmt wird:

$$y = p-((n-l) \text{ modulo } p).$$

9. Portioniergerät (4a, 4b) zum Bereitstellen von Portionen (P) aus in einer Hülle befindlicher pastöser Lebensmittel-Masse, welches ein mittels eines Antriebs (18) antreibbares Looper-Rohr (16a, 16b) aufweist, welches dazu ausgebildet ist, mehrere durch die Hülle miteinander verbundene Portionen (P) an eine Aufhängemaschine (6) zu übergeben, und jeweils einer Steuerung (30a, 30b) zum Steuern von Komponenten des Portioniergerätes (4a, 4b),
**dadurch gekennzeichnet, dass** die Steuerung (30a, 30b) dazu ausgebildet und eingerichtet ist, ein Verfahren (200) nach einem der vorstehenden Ansprüche auszuführen.

**10.** Portioniergerät (4a, 4b) nach Anspruch 9,

wobei den Portioniergeräten (4a, 4b) von jeweils einer dem Portioniergerät (4a, 4b) vorgeschalteten Füllmaschine (2a, 2b) mit einem Abgaberohr (44a, 44b) in einer Hülle befindliche Lebensmittel-Masse übergeben werden kann, und wobei am Ausgangsbereich des jeweiligen Portioniergerätes (4a, 4b) das Looper-Rohr (16a, 16b) angeordnet ist, um Portionen (P) in einer gewünschten Zahl pro Zeiteinheit und mit einem gewünschten Ziel-Gewicht an das Looper-Rohr (16a, 16b) übergeben zu können, und, dass auslassseitig hinter dem Looper-Rohr (16a, 16b) die Haken (14) der Aufhängemaschine (6) in Transportrichtung (T) so bewegt werden können, dass eine gewünschte Zahl von Portionen (P) von dem Looper-Rohr (16a, 16b) auf die Haken (14) der Aufhängemaschine (6) übergeben werden können.

**11.** System (100) zum Bereitstellen von Portionen (P) aus in einer Hülle bereitgestellter pastöser Lebensmittel-Masse, insbesondere Würstchen-Portionen, und zur Durchführung eines Verfahrens nach mindestens einem der vorstehenden Ansprüche mit

- einem ersten Portioniergerät (4a) zum Bereitstellen von Portionen (P) aus in einer Hülle befindlicher pastöser Lebensmittel-Masse, welches ein mittels eines Antriebs (18a) antreibbares Looper-Rohr (16a) aufweist, welches dazu ausgebildet ist, mehrere durch die Hülle miteinander verbundene Portionen (P) an eine Aufhängemaschine (6) zu übergeben,
- einem zweiten Portioniergerät (4b) zum Bereitstellen von Portionen (P) aus in einer Hülle befindlicher pastöser Lebensmittel-Masse, welches ein mittels eines Antriebs (18b) antreibbares Looper-Rohr (16b) aufweist, welches dazu ausgebildet ist, mehrere durch die Hülle miteinander verbundene Portionen (P) an eine Aufhängemaschine (6) zu übergeben,
- einer Aufhängemaschine (6) zum Transportieren von mehreren Portionen (P), die mehrere Haken (14) aufweist zum Aufnehmen mehrerer durch die Hülle verbundener Portionen (P), wobei die Haken (14) mittels mindestens eines umlaufenden mittels eines Antriebs (26) antreibbaren Antriebselements (10) weitertransportiert werden können,
- einer Steuerung (30) zum Steuern von Komponenten des Portioniergerätes (4a, 4b), **dadurch gekennzeichnet, dass** die Steuerung (30) dazu ausgebildet und eingerichtet ist, ein Verfahren (200) nach einem der vorstehenden Ansprüche auszuführen.

**12.** System (100) nach Anspruch 11, mit einer Koch-und/oder Räucheranlage (46), wobei die Aufhängemaschine (6) dazu eingerichtet ist, der Koch-und/oder Räucheranlage (46) an den Haken (14) aufgenommene Portionen (P) zuzuführen.

**13.** Computerprogrammprodukt, umfassend Befehle, die bewirken, dass das Portioniergerät (100) nach einem der Ansprüche 9 oder 10 die Schritte des Verfahrens (200) nach einem der Ansprüche 1 bis 8 ausführt.

Fig. 1

Fig. 2

EP 4 762 933 A1

EP 4 762 933 A1

200

a)

b)

c)

d)

e)

f)

g)

h)

Fig. 3

Fig. 4

EP 4 762 933 A1

H1 H31 H79 H127 H175 H200 H222

n=30

n=200

y

16a

16b

Fig. 5

Europäisches Patentamt
European Patent Office
Office européen des brevets

# EUROPÄISCHER RECHERCHENBERICHT

Nummer der Anmeldung

EP 25 22 4018

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 522 221 A2 (ALKAR RAPIDPAK INC [US]) 13. April 2005 (2005-04-13) * Zusammenfassung; Ansprüche 1-27; Abbildungen 1-7 * * Absätze [0001] - [0016] * ----- | 1,6,9, 11-13 | INV. A22C15/00 B65G47/30 |
| A | EP 1 043 936 B1 (DEC INT [US]) 25. August 2004 (2004-08-25) * Zusammenfassung; Ansprüche 1-15; Abbildungen 1-13 * * Absätze [0001] - [0036] * ----- | 1-13 | |
| A | DE 44 10 391 A1 (ATMOS ANLAGENBAU GMBH [DE]) 28. September 1995 (1995-09-28) * Zusammenfassung; Ansprüche 1-3; Abbildungen 1,2 * * Spalte 1, Zeile 3 - Spalte 2, Zeile 29 * ----- | 1-13 | |
| A | US 10 834 931 B2 (HANDTMANN ALBERT MASCHF [DE]) 17. November 2020 (2020-11-17) * Zusammenfassung; Ansprüche 1-15; Abbildungen 1-13 * * Spalte 1, Zeile 15 - Spalte 12, Zeile 15 * ----- | 1-13 | |

RECHERCHIERTE SACHGEBIETE (IPC)

A22C
B65G

Der vorliegende Recherchenbericht wurde für alle Patentansprüche erstellt

| Recherchenort | Abschlußdatum der Recherche | Prüfer |
|---|---|---|
| Den Haag | 14. April 2026 | Rojo Galindo, Ángel |

## ANHANG ZUM EUROPÄISCHEN RECHERCHENBERICHT
## ÜBER DIE EUROPÄISCHE PATENTANMELDUNG NR.

EP 25 22 4018

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-04-2026

| Im Recherchenbericht angeführtes Patentdokument | Datum der Veröffentlichung | Mitglied(er) der Patentfamilie | Datum der Veröffentlichung |
|---|---|---|---|
| EP 1522221 A2 | 13-04-2005 | AT E372680 T1 | 15-09-2007 |
| | | BR PI0404325 A | 14-06-2005 |
| | | CA 2470892 A1 | 10-04-2005 |
| | | DE 602004008850 T2 | 19-06-2008 |
| | | EP 1522221 A2 | 13-04-2005 |
| | | ES 2291796 T3 | 01-03-2008 |
| | | JP 4359841 B2 | 11-11-2009 |
| | | JP 2005110678 A | 28-04-2005 |
| | | US 2005101239 A1 | 12-05-2005 |
| | | US 2007032183 A1 | 08-02-2007 |
| EP 1043936 B1 | 25-08-2004 | AR 021011 A1 | 12-06-2002 |
| | | AT E274305 T1 | 15-09-2004 |
| | | AU 1328600 A | 22-05-2000 |
| | | CA 2316247 A1 | 11-05-2000 |
| | | DE 69919678 T2 | 13-01-2005 |
| | | EP 1043936 A1 | 18-10-2000 |
| | | JP 2002528100 A | 03-09-2002 |
| | | KR 20010074422 A | 04-08-2001 |
| | | MX PA00006478 A | 14-07-2003 |
| | | US 6086469 A | 11-07-2000 |
| | | WO 0025592 A1 | 11-05-2000 |
| DE 4410391 A1 | 28-09-1995 | DE 4410391 A1 | 28-09-1995 |
| | | WO 9718150 A1 | 22-05-1997 |
| US 10834931 B2 | 17-11-2020 | CA 2984668 A1 | 08-05-2018 |
| | | CN 108056142 A | 22-05-2018 |
| | | EP 3318131 A1 | 09-05-2018 |
| | | ES 2741048 T3 | 07-02-2020 |
| | | JP 6492338 B2 | 03-04-2019 |
| | | JP 2018075002 A | 17-05-2018 |
| | | PL 3318131 T3 | 29-11-2019 |
| | | US 2018125082 A1 | 10-05-2018 |

EPO FORM P0461

Für nähere Einzelheiten zu diesem Anhang : siehe Amtsblatt des Europäischen Patentamts, Nr.12/82